# FASCICULE DE BREVET EUROPEEN

(11) **EP 2 104 619 B1**
(45) Date de publication et mention de la délivrance du brevet: **09.03.2011**
(21) Numéro de dépôt: 07856875.5
(22) Date de dépôt: 19.12.2007
(51) Int. Cl.: B60C 1/00, C08L 9/00, C08L 7/00, C08L 21/00

(54) **SYSTEME PLASTIFIANT ET COMPOSITION DE CAOUTCHOUC POUR PNEUMATIQUE INCORPORANT LEDIT SYSTEME**
WEICHMACHERSYSTEM UND KAUTSCHUKZUSAMMENSETZUNG FÜR DAS SYSTEM ENTHALTENDEN REIFEN
PLASTICIZING SYSTEM AND RUBBER COMPOSITION FOR TIRE CONTAINING SAID SYSTEM

(30) Priorité: 27.12.2006 FR 0611511
(43) Date de publication de la demande: 30.09.2009
(73) Titulaire: Société de Technologie MICHELIN, 63000 Clermont-Ferrand (FR); MICHELIN Recherche et Technique S.A., 1763 Granges-Paccot (CH)
(72) Inventeur: LOPITAUX, Garance, F-03330 Bellenaves (FR); VASSEUR, Didier, F-63100 Clermont-Ferrand (FR)
(74) Mandataire: Ribière, Joel
(86) Numéro de dépôt international: PCT/EP2007/011152
(87) Numéro de publication internationale: WO 2008/080555

(56) Documents cités:
- EP-A- 1 857 493
- EP-A1- 0 694 383
- US-A- 4 543 420
- US-A- 5 709 956

## Description

La présente invention se rapporte aux compositions de caoutchouc destinées notamment à la fabrication de bandes de roulement de pneumatiques, elle est plus particulièrement relative aux systèmes plastifiants utilisables pour la plastification de telles compositions.

Une bande de roulement de pneumatique doit obéir, on le sait, à un grand nombre d'exigences techniques, souvent antinomiques, parmi lesquelles une faible résistance au roulement, une résistance élevée à l'usure, ainsi qu'une adhérence élevée sur route sèche comme mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" *(Highly Dispersible Silica),* capables de rivaliser, du point de vue du pouvoir renforçant, avec les noirs de carbone conventionnels de grade pneumatique. Ainsi, aujourd'hui, ces charges inorganiques renforçantes remplacent peu à peu les noirs de carbone dans les bandes de roulement des pneumatiques, d'autant plus qu'elles possèdent une autre vertu connue, celle d'augmenter l'adhérence des pneumatiques sur route mouillée, enneigée ou verglacée.

L'amélioration du compromis adhérence/ résistance à l'usure reste toutefois une préoccupation constante des concepteurs de pneumatiques, que ces derniers comportent des bandes de roulement chargées de silice comme de noir de carbone.

Pour favoriser les propriétés de résistance à l'usure et à l'abrasion et/ou d'adhérence des bandes de roulement de pneumatiques, il est connu d'utiliser des résines plastifiantes hydrocarbonées dans leurs compositions de caoutchouc, comme décrit par exemple dans les brevets ou demandes de brevet US-A-3,927,144, GB-A-2,178,046, JP-A-61-190538, JP-A-09-328577, WO-A-91/18947, WO-A-02/088238, WO-A-02/072688, WO-A-02/072689.

Des perfectionnements aux solutions ci-dessus ont été obtenus en combinant ces résines plastifiantes hydrocarbonées avec certains agents plastifiants spécifiques.

En particulier, pour augmenter encore la résistance à l'usure et à l'abrasion des bandes de roulement des pneumatiques, ont été proposés des systèmes plastifiants comportant en combinaison des huiles non aromatiques du type MES ou TDAE avec des résines hydrocarbonées terpéniques telles que polylimonène, ou encore avec des résines hydrocarbonées de copolymère coupe C5/vinylaromatique (voir demandes WO-A-2005/087859 et WO-A-2006/061064).

Or, poursuivant leurs recherches, les Demanderesses ont découvert un nouveau système plastifiant à base d'une résine plastifiante hydrocarbonée qui permet, comparé à une combinaison d'une résine hydrocarbonée et d'une huile MES, d'améliorer encore la résistance à l'usure des pneumatiques sans pénaliser leur adhérence sur sol humide.

Ainsi, un premier objet de l'invention concerne une composition de caoutchouc comprenant au moins un élastomère diéniquc, une charge renforçante et un système plastifiant, caractérisée en ce que ledit système plastifiant comporte en combinaison :
- une résine plastifiante hydrocarbonée dont la température de transition vitreuse (Tg) est supérieure à 0°C ; et
- un ester tri- ou pyromellitate répondant à la formule (I) : 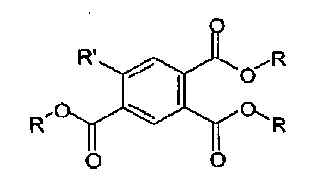 dans laquelle les radicaux R, identiques ou différents, représentent un radical hydrocarboné ; R' représente l'hydrogène ou le groupement COOR.

L'invention concerne également, en soi, un système plastifiant utilisable pour la plastification d'une composition de caoutchouc diénique, ledit système comportant en combinaison une résine plastifiante hydrocarbonée dont la Tg est supérieure à 0°C et un composé de formule (I), ainsi que l'utilisation d'un tel système pour la plastification d'une composition de caoutchouc diénique pour pneumatique.

L'invention a particulièrement pour objet les pneumatiques ou produits semi-finis en caoutchouc destinés à ces pneumatiques, ces produits semi-finis étant de préférence choisis dans le groupe constitué par les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques,
lorsqu'ils comportent une composition de caoutchouc conforme à l'invention.

Les pneumatiques de l'invention sont particulièrement destinés à équiper des véhicules à moteur de type tourisme, SUV ("*Sport Utility Vehicles*")*,* deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

### I. - MESURES ET TESTS

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-2. Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : tᵢ est le délai d'induction, c'est-à-dire le temps nécessaire au début de la réaction de vulcanisation ; t_{α}, (par exemple t₉₀) est le temps nécessaire pour atteindre une conversion de α%, c'est-à-dire α% (par exemple 90%) de l'écart entre les couples minimum et maximum. On mesure également la constante de vitesse de conversion notée K (exprimée en min-¹), d'ordre 1, calculée entre 30% et 80% de conversion, qui permet d'apprécier la cinétique de vulcanisation.

### I-3. Dureté Shore A

La dureté Shore A des compositions après cuisson est appréciée conformément à la norme ASTM D 2240-86.

### I-4. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) ou les modules sécants dits "vrais" (ramenés dans ce cas à la section réelle de l'éprouvette) à 10% d'allongement (notés respectivement "M10" et "E10"), 100% d'allongement (respectivement "M100" et "E100") et 300% d'allongement (respectivement "M300" et "E300"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### I-5. Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à une température de 40°C. On effectue un balayage en amplitude de déformation de 0,1 à 50% (cycle aller), puis de 50% à 1% (cycle retour); pour le cycle retour, on enregistre la valeur maximale du facteur de perte, notée tan(δ)ₘₐₓ.

### I-6. Tests sur pneumatiques

### A) Résistance au roulement

La résistance au roulement est mesurée sur un volant, selon la méthode ISO 87-67 (1992). Une valeur supérieure à celle du témoin, arbitrairement fixée à 100, indique un résultat amélioré c'est-à-dire une résistance au roulement moindre.

### B) Résistance à l'usure

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du témoin, arbitrairement fixée à 100, indique un résultat amélioré c'est-à-dire un kilométrage parcouru supérieur.

### C) Adhérence sur sol humide

Pour apprécier les performances d'adhérence sur sol humide, on analyse le comportement des pneumatiques montés sur un véhicule automobile déterminé parcourant, sous des conditions de vitesse limite, un circuit fortement virageux et arrosé de manière à maintenir le sol humide. On mesure le temps minimal nécessaire pour parcourir la totalité du circuit ; une valeur supérieure à celle du témoin, arbitrairement fixée à 100, indique un résultat amélioré c'est-à-dire un temps de parcours plus court.

### II. DESCRIPTION DETAILLEE DE L'INVENTION

La composition de caoutchouc selon l'invention, utilisable notamment pour la fabrication d'un pneumatique ou d'une bande de roulement dé pneumatique, comporte au moins un élastomère diénique, une charge renforçante et un système plastifiant spécifique.

Sauf indication expresse différente, les pourcentages indiqués dans la présente demande sont des % en masse.

### II-1. Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylinésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur (% molaire) en liaisons -1,2 de la partie butadiénique comprise entre 4% et 65%, une teneur (% molaire) en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (c'est-à-dire pour plus de 50 pce) un SBR, qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur (% molaire) en liaisons trans-1,4 comprise entre 15% et 75% et une Tg comprise entre -20°C et -55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre -65°C et -10°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un S-SBR ou un E-SBR (à titre d'élastomère haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" *("non-black filler")* par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque les compositions de l'invention sont destinées à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z-A-Sₓ-A-Z

, dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 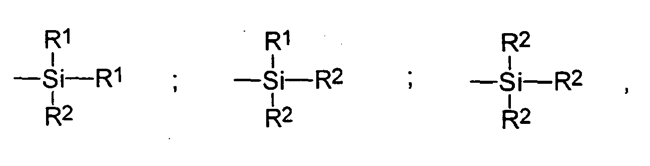 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210).

Dans les compositions de caoutchouc conformes à l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-3. Système plastifiant

Les compositions de caoutchouc de l'invention ont pour caractéristique essentielle d'utiliser un système plastifiant comportant en combinaison une résine plastifiante hydrocarbonée dont la Tg est supérieure à 0°C et un ester tri- ou pyromellitate répondant à la formule (I), comme expliqué en détail ci-après.

### II-3-A. - Résine plastifiante hydrocarbonée

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) diénique(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une Tg supérieure à 20°C ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine plastifiante hydrocarbonée présente au moins une, encore plus préférentiellement l'ensemble, des caractéristiques suivantes :
- une Tg supérieure à 30°C ;
- une masse Mn comprise entre 500 et 1500 g/mol ;
- un indice Ip inférieur à 2.

La température de transition vitreuse Tg est mesurée de manière connue par DSC (*Differential Scanning Calorimetry*), selon la norme ASTM D3418 (1999).

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
- résines de copolymère limonène/ styrène : par DRT sous dénomination "Dercolyte TS 105" de la société DRT, par ARIZONA Chemical Company sous dénominations "ZT115LT" et "ZT5100".

Le taux de résine hydrocarbonée est préférentiellement compris entre 5 et 60 pce. En dessous du minimum indiqué, l'effet technique visé peut s'avérer insuffisant, alors qu'au-delà de 60 pce le pouvoir collant des compositions à l'état cru, sur les outils de mélangeage, peut dans certains cas devenir rédhibitoire du point de vue industriel. Pour ces raisons, le taux de résine hydrocarbonée est plus préférentiellement compris entre 5 et 40 pce, encore plus préférentiellement compris entre 10 et 30 pce.

### II-3-B. - Ester tri- ou pyromellitate

L'ester tri- ou pyromellitate du système plastifiant de l'invention répond à la formule (I) : 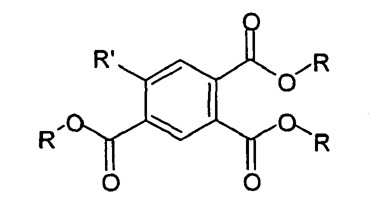 dans laquelle :
- les radicaux R, identiques ou différents, représentent un radical (ou une chaîne) hydrocarboné(e) quelconque ayant de préférence de 1 à 30 atomes de carbone et pouvant comporter un hétéro-atome choisi notamment parmi S, O et N ;
- R' représente l'hydrogène (cas d'un trimellitate) ou le groupement COOR (cas d'un pyromellitate).

Des esters tri- et pyromellitates de formule (I) sont connus comme plastifiants de matières plastiques et divers autres polymères. Ils ont été notamment décrits dans l'article "Oils, Plasticizers and Other Rubber Chemicals" (chapitre 8, paragraphe 8.2, pages 132-137 de Basic Rubber Testing (2003), Ed. Dick, John S. Publisher - ISBN: 0-8031-3358-8), également décrits voire simplement mentionnés parmi d'autres agents plastifiants possibles dans les demandes de brevet US-A-4 287 928, EP-A-1 632 364, WO-A-02/088238, toutes relatives à des compositions de caoutchouc pour pneumatique.

Toutefois, à la connaissance des Demanderesses, ils n'ont jamais été utilisés en combinaison avec une résine plastifiante hydrocarbonée, en particulier dans de telles compositions de caoutchouc.

De préférence, les radicaux R sont choisis dans le groupe constitué par les alkyles, linéaires, ramifiés ou cycliques, comportant de 1 à 30 atomes de carbone, et les aryles, aralkyles ou alkaryles comportant de 6 à 30 atomes de carbone.

Plus préférentiellement, les radicaux R représentent un groupe alkyle, linéaire, ramifié ou cyclique, comportant de 1 à 20, encore plus préférentiellement de 1 à 15 atomes de carbone.

A titre d'exemples de tels radicaux R préférentiels comportant de 1 à 15 atomes de carbone, on peut citer par exemple les radicaux méthyle, éthyle, butoxyéthyle, butoxyéthoxyéthyle, propyle, propényle, butyle, isobutyle, dibutyle, diisobutyle, benzylbutyle, heptyle, hexyle, éthylhexyle, octyle, isooctyle, benzyloctyle, dioctyle, diisooctyle, nonyle, isononyle, éthylnonyle, isodécyle, diisodécyle, tridécyle, octyldécyle.

On utilise préférentiellement un trimellitate de formule (II) : 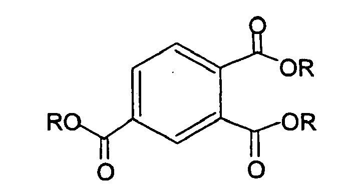 dans laquelle les radicaux R, identiques ou différents, représentent un radical hydrocarboné ayant de 1 à 20, plus préférentiellement de 1 à 15 atomes de carbone.

Les masses moléculaires préférentielles correspondantes sont typiquement comprises dans un domaine de 252 à 1051, plus préférentiellement de 252 à 841 g/mol.

De tels trimellitates préférentiels sont disponibles commercialement, ils ont été développés essentiellement pour la plastification de matières plastiques rigides telles que le PVC. A titre d'exemples, on peut citer les trimellitates de la série "Jayflex" commercialisés par la société Exxon Mobil, notamment les trimellitates "Jayflex TIOTM" (R = C₈H₁₇ dans la formule II) ou "Jayflex TINTM" (R = C₉H₁₉ dans la formule II).

On peut citer, comme autres exemples de ces trimellitates de formule (II), les plastifiants de la série "Palatinol", par exemple "TOTM" (R = C₈H₁₇), "TNTM" (R = C₉H₁₉) ou "79TM-I" (tri-éthyl-nonyl) de BASF, "Plasthall" de CP HALL ou encore "Diplast" de LONZA.

On utilise tout particulièrement le trioctyl trimellitate (en abrégé "TOTM" ou tri-2-éthylhexyl-trimellitate) ou le tri-isooctyl trimellitate (en abrégé "TIOTM") - tous les deux de formule (II) dans laquelle R représente le groupement C₈H₁₇ - ou un mélange de ces deux composés TOTM et TIOTM.

Dans la composition de caoutchouc de l'invention, le taux de tri- ou pyromellitate est préférentiellement compris entre 5 et 60 pce. En dessous du minimum indiqué, l'effet technique visé peut s'avérer insuffisant, alors qu'au-delà de 60 pce on s'expose à une diminution d'adhérence des pneumatiques lorsque les compositions de l'invention sont utilisées dans les bandes de roulement de ces pneumatiques. Pour ces raisons, le taux de tri- ou pyromellitates est plus préférentiellement compris entre 5 et 40 pce, encore plus préférentiellement compris entre 10 et 30 pce.

Quant au taux global de système plastifiant selon l'invention, dans la composition de caoutchouc de l'invention, il est préférentiellement compris entre 10 et 100 pce, plus préférentiellement compris entre 20 et 80 pce (en particulier entre 20 et 50 pce).

Tous les tri- ou pyromellitates décrits dans le présent paragraphe sont liquides à température ambiante (23°C). Ils présentent une Tg typiquement inférieure à -80°C. A ce titre, selon un mode de réalisation particulier de l'invention, ils pourraient être utilisés en tout ou partie comme huile d'extension des élastomères diéniques présents dans la composition de caoutchouc de l'invention.

### II-4. Additifs divers

Les compositions de caoutchouc conformes à l'invention peuvent comporter également tout ou partie des additifs usuels habituellement utilisés dans les compositions d'élastomères destinées à la fabrication de pneumatiques ou produits semi-finis pour pneumatiques, comme par exemple d'autres plastifiants (autres que le système plastifiant de l'invention), de préférence non aromatiques ou très faiblement aromatiques, par exemple des huiles naphténiques, paraffiniques, des huiles MES ou TDAE, des esters (en particulier trioléates) de glycérol notamment des esters naturels tels que huiles végétales de colza ou de tournesol, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation, des agents anti-réversion.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II-5 . Fabrication des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer une composition de caoutchouc présentant notamment une résistance à l'usure améliorée, comporte les étapes suivantes :
- incorporer à un élastomère diénique, au cours d'une première étape (dite "non-productive"), au moins une charge renforçante et un système plastifiant, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C,
et il est caractérisé en ce que ledit système plastifiant comporte en combinaison une résine plastifiante hydrocarbonée dont la Tg est supérieure à 0°C et un tri- ou pyromellitate répondant à la formule (I) précitée, de préférence un trimellitate répondant à la formule (II) précitée dans laquelle les radicaux R, identiques ou différents, représentent un radical hydrocarboné ayant de 1 à 20 atomes de carbone.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et agent de couplage si nécessaire, système plastifiant), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Dans le cas d'une utilisation de la composition de l'invention en bande de roulement de pneumatique, le taux de soufre est par exemple compris entre 0,5 et 3,0 pce, celui de l'accélérateur primaire entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation).

### III. EXEMPLES DE REALISATION DE L'INVENTION

### III-1. Préparation des compositions de caoutchouc et bandes de roulement

On procède pour les essais qui suivent de la manière suivante: on introduit dans un mélangeur interne, rempli à 70% et dont la température initiale de cuve est d'environ 60°C, successivement la charge renforçante, l'agent de couplage, le système plastifiant, l'élastomère diénique ainsi que les divers autres ingrédients à l'exception du système de vulcanisation. On conduit alors un travail thermomécanique (phase non-productive) en une étape, qui dure au total environ 3 à 4 minutes, jusqu'à atteindre une température maximale de "tombée" de 165°C.

On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de bandes de roulement de pneumatiques tourisme.

### III-2. Tests de caoutchouterie et tests de roulage en pneumatiques

Cet essai a pour but de démontrer les performances améliorées d'une composition de caoutchouc selon l'invention, comparée à une composition témoin de l'art antérieur.

On prépare pour cela deux compositions à base d'élastomères diéniques (coupage SSBR et BR) renforcées de silice et de noir de carbone, notées C-1 et C-2. Les deux compositions sont préparées dans un mélangeur de taille suffisante pour permettre la fabrication de bandes de roulement et la réalisation de tests de roulage de pneumatiques comportant ces bandes de roulement.

Les deux compositions testées sont identiques, exception faite du système plastifiant utilisé qui comporte en combinaison une même résine plastifiante hydrocarbonée (polylimonène) à titre de premier agent plastifiant et deux autres types de composés à titre de second agent plastifiant :
- composition C-1 : résine polylimonène + huile MES ;
- composition C-2 : résine polylimonène + trimellitate.

Comme expliqué en introduction du présent mémoire, la composition C-1 est une composition de référence pour les Demanderesses, ayant prouvé par ailleurs ses excellentes performances en termes de résistance à l'usure ou abrasion. L'huile MES (pour "Medium Extracted Solvates") est une huile du type "non-aromatique", se caractérisant par un très faible taux de polyaromatiques (environ 20 à 50 fois moins) comparativement aux huiles aromatiques conventionnelles dérivées du pétrole et fortement aromatiques, connues sous le nom d'huiles DAE (pour "*Distillate Aromatic Extracts*")*.*

La composition C-2, comportant le système plastifiant conforme à l'invention, est donc elle-même conforme à l'invention.

Les tableaux 1 et 2 donnent la formulation des deux compositions (tableau 1 - taux des différents produits exprimés en "pce" ou parties en poids pour cent parties d'élastomère(s)), leurs propriétés avant et après cuisson (30 min à 150°C) ; le système de vulcanisation est constitué par soufre et sulfénamide.

L'examen des différents résultats du tableau 2 montre que les propriétés de caoutchouterie mesurées sont sensiblement équivalentes d'une composition à l'autre, avant comme après cuisson.

Rien dans ces propriétés de caoutchouterie ne laissait donc prévoir à l'homme du métier les performances améliorées qui ont été observées pour la composition de l'invention, comme cela est expliqué en détail ci-après.

Les deux compositions ont été testées comme bandes de roulement de pneumatiques tourisme à carcasse radiale, de dimensions 195/65 R15 (indice de vitesse H), conventionnellement fabriqués et en tous points identiques hormis la composition de caoutchouc constitutive de la bande de roulement : composition C-1 pour les pneus témoins (notés P-1) et composition C-2 pour les pneus de l'invention (notés P-2).

Les pneumatiques ont été testés conformément aux indications du paragraphe I-6 précédent (véhicule de marque "Renault Laguna" pour le test d'adhérence ; véhicule de marque "Mercedes C200" pour le test de résistance à l'usure).

Les résultats de roulage obtenus sont reportés dans le tableau 3 annexé.

Ils démontrent clairement que les pneus P-2 de l'invention offrent le meilleur compromis de propriétés, avec tout particulièrement une résistance à l'usure augmentée de manière notable (+ 7%) par rapport aux pneus P-1 et au système plastifiant (polylimonène+huile MES) qui constitue pourtant une référence sur le critère de résistance à l'usure (voir demande WO-A-2005/087859 précitée). Il doit être souligné que cette amélioration est obtenue sans pénalisation des autres propriétés, notamment celle d'adhérence sur sol humide.

D'autres pneus témoins (P-3) ont été préparés utilisant en combinaison une résine polylimonène et un autre plastifiant de la famille des plastifiants esters, en l'occurrence un alkyl-oléate ("Plasthall 7049" de CP HALL) tel que décrit par exemple dans la demande WO-A02/088238 précitée.

Le test de résistance à l'usure a démontré une résistance à l'usure supérieure de 17% pour les pneus P-2 conformes à l'invention, comparés aux pneus P-3, ce qui confirme largement la supériorité du plastifiant trimellitate sur un autre plastifiant de type ester en présence d'une même résine plastifiante hydrocarbonée.

En conclusion, le nouveau système plastifiant de l'invention offre aux compositions de caoutchouc pour pneumatiques un compromis de propriétés particulièrement avantageux, avec une résistance à l'usure améliorée sans pénalisation des autres propriétés, notamment celle d'adhérence sur sol humide.

**Tableau 1**

| Composition N°: | C-1 | C-2 |
|---|---|---|
| SBR (1) | 70 | 70 |
| BR (2) | 30 | 30 |
| silice (3) | 80 | 80 |
| Agent de couplage (4) | 6.4 | 6.4 |
| Noir de carbone (5) | 6 | 6 |
| plastifiant (6) | 15 | 15 |
| plastifiant (7) | 14 | - |
| plastifiant (8) | - | 14 |
| DPG (9) | 1.5 | 1.5 |
| ZnO | 2.5 | 2.5 |
| Acide stéarique | 2 | 2 |
| Cire anti-ozone | 1.5 | 1.5 |
| Antioxydant (10) | 1.9 | 1.9 |
| soufre | 1.1 | 1.1 |
| Accélérateur (11) | 2.0 | 2.0 |

| | | |
|---|---|---|
| (1) SSBR avec 25% de styrène, 64% de motifs polybutadiène 1-2 et 25% de motifs polybutadiène 1-4 trans (Tg = -18°C) ; (2) BR avec 4,3% de 1-2 ; 2,7% de trans ; 93% de cis 1-4 (Tg = -106°C) ; (3) silice "Zeosil 1165MP" de la société Rhodia, type "HDS" (BET et CTAB : environ 160 m²/g); (4) agent de couplage TESPT ("Si69" de la société Degussa) ; (5) noir de carbone N234 (grade ASTM) ; (6) résine polylimonène ("Dercolyte L120" de la société DRT) ; (7) huile MES (Catenex SNR de Shell) ; (8) trioctyle trimellitate ("Diplast TM/ST" de Lonza) ; (9) diphénylguanidine (Perkacit DPG de la société Flexsys) ; (10) N-1,3-diméthylbutyl-N-phénylparaphénylènediamine (Santoflex 6-PPD de la société Flexsys) ; (11) CBS (Santocure de Flexsys). | | |

**Tableau 2**

| Composition N°: | C-1 | C-2 |
|---|---|---|
| *Propriétés avant cuisson:* | | |
| Mooney (UM) | 80 | 74 |
| tᵢ (min) | 6.6 | 7.0 |
| t₉₀ (min) | 26.8 | 27.2 |
| t₉₀-tᵢ(min) | 20.2 | 20.2 |
| K(min⁻¹) | 0.113 | 0.114 |

| *Propriétés après cuisson:* | | |
|---|---|---|
| dureté Shore A | 68.6 | 68.4 |
| M10 (MPa) | 6.1 | 5.9 |
| M100 (MPa) | 2.0 | 2.1 |
| M300 (MPa) | 2.5 | 2.6 |
| M300/M100 | 1.25 | 1.24 |
| tan(δ)ₘₐₓ (40°C) | 0.291 | 0.280 |
| contrainte à la rupture (MPa) | 20.3 | 20.0 |
| allongement à la rupture (%) | 477 | 486 |

**Tableau 3**

| Propriétés (en unités relatives) | P-1 | P-2 |
|---|---|---|
| Résistance au roulement | 100 | 102 |
| Résistance à l'usure : | 100 | 107 |
| Adhérence sur sol humide : | 100 | 100 |

(une valeur supérieure à 100 indique une performance améliorée par rapport au témoin P-1 de base 100)

## Revendications

1. Composition de caoutchouc comprenant au moins un élastomère diénique, une charge renforçante et un système plastifiant, **caractérisée en ce que** ledit système plastifiant comporte :
- une résine plastifiante hydrocarbonée dont la température de transition vitreuse (Tg) est supérieure à 0°C ; et
- un ester tri- ou pyromellitate répondant à la formule (I) : 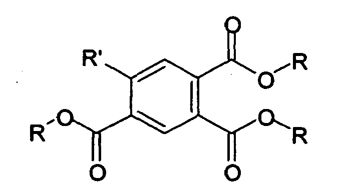 dans laquelle les radicaux R, identiques ou différents, représentent un radical hydrocarboné, R' représente l'hydrogène ou le groupement COOR.

2. Composition de caoutchouc selon la revendication 1, dans laquelle les radicaux R, identiques ou différents, sont choisis dans le groupe constitué par les alkyles, linéaires, ramifiés ou cycliques, comportant de 1 à 30 atomes de carbone, et les aryles, aralkyles ou alkaryles comportant de 6 à 30 atomes de carbone.

3. Composition de caoutchouc selon la revendication 2, dans laquelle les radicaux R représentent un groupe alkyle, linéaire, ramifié ou cyclique, comportant de 1 à 20 atomes de carbone.

4. Composition de caoutchouc selon la revendication 3, dans laquelle l'ester est un trimellitate de formule (II) :

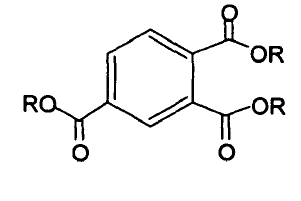

5. Composition de caoutchouc selon la revendication 4, dans laquelle le trimellitate est choisi dans le groupe constitué par le trioctyl trimellitate (TOTM), le tri-isooctyl trimellitate (TIOTM), et les mélanges de ces composés.

6. Composition de caoutchouc selon l'une quelconque des revendications 1 à 5, dans laquelle le taux d'ester tri- ou pyromellitate est compris entre 5 et 60 pce.

7. Composition selon l'une quelconque des revendications 1 à 6, dans laquelle la Tg de la résine hydrocarbonée est supérieure à + 20°C.

8. Composition selon l'une quelconque des revendications 1 à 7, dans laquelle la masse moléculaire moyenne en nombre de la résine hydrocarbonée est comprise entre 400 et 2000 g/mol.

9. Composition selon l'une quelconque des revendications 1 à 8, dans laquelle la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

10. Composition selon l'une quelconque des revendications 1 à 9, dans laquelle le taux de résine plastifiante hydrocarbonée est compris entre 5 et 60 pce.

11. Composition selon l'une quelconque des revendications 1 à 10, dans laquelle l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

12. Bande de roulement de pneumatique comportant une composition de caoutchouc selon l'une quelconque des revendications 1 à 11.

13. Pneumatique comportant une bande de roulement selon la revendication 12.

14. Système plastifiant utilisable pour la plastification d'une composition de caoutchouc diénique, ledit système comportant en combinaison :
- une résine plastifiante hydrocarbonée dont la température de transition vitreuse (Tg) est supérieure à 0°C ; et
- un ester tri- ou pyromellitate répondant à la formule (I) : 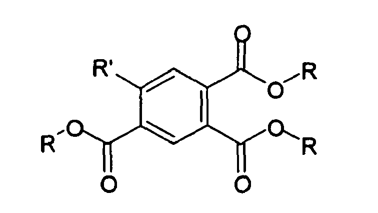 dans laquelle les radicaux R, identiques ou différents, représentent un radical hydrocarboné ; R' représente l'hydrogène ou le groupement COOR.

15. Système plastifiant selon la revendication 14, dans lequel la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

## Claims

1. Rubber composition comprising at least one diene elastomer, one reinforcing filler and one plasticizing system, **characterized in that** the said plasticizing system comprises:
- a plasticizing hydrocarbon resin, the glass transition temperature (Tg) of which is greater than 0°C; and
- a tri- or pyromellitate ester corresponding to the formula (I): 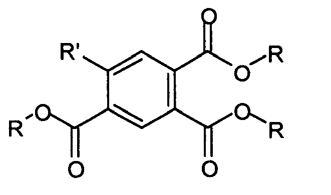 in which the R radicals, which are identical or different, represent a hydrocarbon radical and the R' radical represents hydrogen or the COOR group.

2. Rubber composition according to Claim 1, in which the R radicals, which are identical or different, are chosen from the group consisting of linear, branched or cyclic alkyls comprising from 1 to 30 carbon atoms and aryls, aralkyls or alkaryls comprising from 6 to 30 carbon atoms.

3. Rubber composition according to Claim 2, in which the R radicals represent a linear, branched or cyclic alkyl group comprising from 1 to 20 carbon atoms.

4. Rubber composition according to Claim 3, in which the ester is a trimellitate of formula (II):

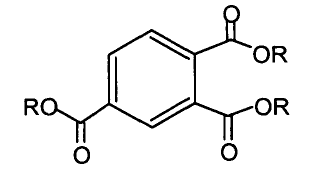

5. Rubber composition according to Claim 4, in which the trimellitate is chosen from the group consisting of trioctyl trimellitate (TOTM), triisooctyl trimellitate (TIOTM) and the mixtures of these compounds.

6. Rubber composition according to any one of Claims 1 to 5, in which the level of tri- or pyromellitate ester is between 5 and 60 pce.

7. Composition according to any one of Claims 1 to 6, in which the Tg of the hydrocarbon resin is greater than +20°C.

8. Composition according to any one of Claims 1 to 7, in which the number-average molecular weight of the hydrocarbon resin is between 400 and 2000 g/mol.

9. Composition according to any one of Claims 1 to 8, in which the plasticizing hydrocarbon resin is chosen from the group consisting of cyclopentadiene (abbreviated to CPD) or dicyclopentadiene (abbreviated to DCPD) homopolymer or copolymer resins, terpene homopolymer or copolymer resins, C₅ fraction homopolymer or copolymer resins and the mixtures of these resins.

10. Composition according to any one of Claims 1 to 9, in which the level of plasticizing hydrocarbon resin is between 5 and 60 pce.

11. Composition according to any one of Claims 1 to 10, in which the diene elastomer is chosen from the group consisting of polybutadienes, synthetic polyisoprenes, natural rubber, butadiene copolymers, isoprene copolymers and the blends of these elastomers.

12. Tyre tread comprising a rubber composition according to any one of Claims 1 to 11.

13. Tyre comprising a tread according to Claim 12.

14. Plasticizing system which can be used for the plasticizing of a diene rubber composition, the said system comprising, in combination:
- a plasticizing hydrocarbon resin, the glass transition temperature (Tg) of which is greater than 0°C; and
- a tri- or pyromellitate ester corresponding to the formula (I): 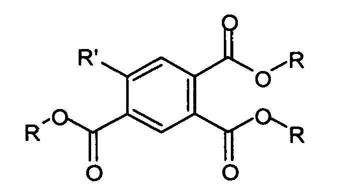 in which the R radicals, which are identical or different, represent a hydrocarbon radical and the R' radical represents hydrogen or the COOR group.

15. Plasticizing system according to Claim 14, in which the plasticizing hydrocarbon resin is chosen from the group consisting of cyclopentadiene (abbreviated to CPD) or dicyclopentadiene (abbreviated to DCPD) homopolymer or copolymer resins, terpene homopolymer or copolymer resins, C₅ fraction homopolymer or copolymer resins and the blends of these resins.

## Patentansprüche

1. Kautschukzusammensetzung, umfassend mindestens ein Dien-Elastomer, einen verstärkenden Füllstoff und ein Weichmachersystem, **dadurch gekennzeichnet, dass** das Weichmachersystem Folgendes aufweist:
- ein weichmachendes Kohlenwasserstoffharz, dessen Glasübergangstemperatur (Tg) mehr als 0 °C beträgt; und
- einen Tri- oder Pyromellitsäureester der Formel (I): 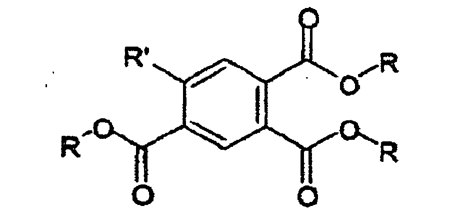 wobei die Reste R, die identisch oder verschiedenartig sind, einen Kohlenwasserstoffrest darstellen, R' Wasserstoff oder die Gruppe COOR darstellt.

2. Kautschukzusammensetzung nach Anspruch 1, wobei die Reste R, die identisch oder verschiedenartig sind, aus der Gruppe ausgewählt sind, die aus den geradkettigen, verzweigten oder zyklischen Alkylen, die 1 bis 30 Kohlenstoffatome aufweisen, und den Arylen, Aralkylen und Alkarylen, die 6 bis 30 Kohlenstoffatome aufweisen, besteht.

3. Kautschukzusammensetzung nach Anspruch 2, wobei die Reste R eine geradkettige, verzweigte oder zyklische Alkylgruppe darstellen, die 1 bis 20 Kohlenstoffatome aufweist.

4. Kautschukzusammensetzung nach Anspruch 3, wobei der Ester ein Trimellitsäureester der Formel (II) ist:

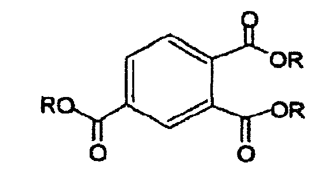

5. Kautschukzusammensetzung nach Anspruch 4, wobei der Trimellitsäureester aus der Gruppe ausgewählt ist, die aus Trioctyltrimellitat (TOTM), Triisooctyltrimellitat (TIOTM) und den Mischungen dieser Verbindungen besteht.

6. Kautschukzusammensetzung nach einem beliebigen der Ansprüche 1 bis 5, wobei der Gehalt an Tri- oder Pyromellitsäureester im Bereich von 5 bis 60 phr liegt.

7. Zusammensetzung nach einem beliebigen der Ansprüche 1 bis 6, wobei die Tg des Kohlenwasserstoffharzes mehr als +20 °C beträgt.

8. Zusammensetzung nach einem beliebigen der Ansprüche 1 bis 7, wobei das Zahlenmittel der Molekülmasse des Kohlenwasserstoffharzes im Bereich von 400 bis 2.000 g/mol liegt.

9. Zusammensetzung nach einem beliebigen der Ansprüche 1 bis 8, wobei das weichmachende Kohlenwasserstoffharz aus der Gruppe ausgewählt ist, die aus den Homopolymer- oder Copolymerharzen von Cyclopentadien (CPD abgekürzt) oder Dicyclopentadien (DCPD abgekürzt), den Terpen-Homopolymer- oder Copolymerharzen, den Homopolymer- oder Copolymerharzen von C5-Fraktionen und den Mischungen dieser Harze besteht.

10. Zusammensetzung nach einem beliebigen der Ansprüche 1 bis 9, wobei der Gehalt an weichmachendem Kohlenwasserstoffharz im Bereich von 5 bis 60 phr liegt.

11. Zusammensetzung nach einem beliebigen der Ansprüche 1 bis 10, wobei das Dien-Elastomer aus der Gruppe ausgewählt ist, die aus den Polybutadienen, den Polyisoprenen synthetischen Ursprungs, natürlichem Kautschuk, den Butadien-Copolymeren, den Isopren-Copolymeren und den Mischungen dieser Elastomere besteht.

12. Luftreifenlauffläche, die eine Kautschukzusammensetzung nach einem beliebigen der Ansprüche 1 bis 11 aufweist.

13. Luftreifen, der eine Lauffläche nach Anspruch 12 aufweist.

14. Weichmachersystem, das zum Weichmachen einer Dien-Kautschukzusammensetzung verwendet werden kann, wobei das System Folgendes in Kombination aufweist:
- ein weichmachendes Kohlenwasserstoffharz, dessen Glasübergangstemperatur (Tg) mehr als 0 °C beträgt; und
- einen Tri- oder Pyromellitsäureester der Formel (I): 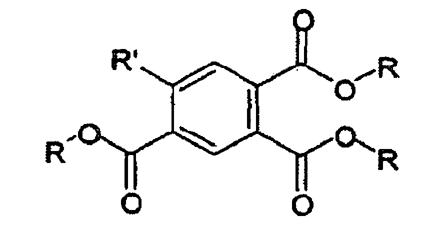 wobei die Reste R, die identisch oder verschiedenartig sind, einen Kohlenwasserstoffrest darstellen; R' Wasserstoff oder die Gruppe COOR darstellt.

15. Weichmachersystem nach Anspruch 14, wobei das weichmachende Kohlenwasserstoffharz aus der Gruppe ausgewählt ist, die aus den Homopolymer- oder Copolymerharzen von Cyclopentadien (CPD abgekürzt) oder Dicyclopentadien (DCPD abgekürzt), den Terpen-Homopolymer- oder Copolymerharzen, den Homopolymer- oder Copolymerharzen von C5-Fraktionen und den Mischungen dieser Harze besteht.
